# EUROPEAN PATENT APPLICATION

(11) **EP 2 942 545 A1**
(43) Date of publication of application: **11.11.2015**
(21) Application number: 14735265.2
(22) Date of filing: 05.01.2014
(51) Int. Cl.: F16H 3/42, F16H 3/093, F16H 37/02

(54) **GEARED CONTINUOUSLY VARIABLE TRANSMISSION**

(30) Priority: 06.01.2013 JP 2013000279
(71) Applicant: Matsumura, Hideki, Tokushima 770-0872 (JP)
(72) Inventor: Matsumura, Hideki, Tokushima 770-0872 (JP)
(74) Representative: Gulde & Partner
(86) International application number: PCT/JP2014/050002
(87) International publication number: WO 2014/106950

(57) **Abstract**

A mechanical transmission having higher power transmission efficiency than existing mechanical transmissions is achieved and thus environmental load is reduced. A geared stepless transmission includes a geared continuously variable transmission including a spiral gear (Tg) and a second gear (Pg), driver configured to drive the spiral gear and second gear, brake configured to brake the spiral gear and second gear, switch configured to switch between the driver and brake. Thus, the geared stepless transmission can continuously change the speed using the gears. The geared stepless transmission also includes a power distribution mechanism configured to distribute the power of a power source, a power combination mechanism configured to combine power outputted from the geared continuously variable transmission which has used the distributed power, a gear change mechanism configured to change power in steps and to output the resulting power, and power transmission path switch configured to switch between a path including the geared continuously variable transmission and a path not including it. Thus, a practical geared continuously variable transmission is achieved.

## Description

The present invention relates to a stepless transmission, which can continuously change the rotational speed ratio. In particular, the present invention relates to a geared stepless transmission.

### Background Art

An internal combustion engine has a revolution number range which is the most efficient in terms of fuel economy or power performance and preferably maintains the number of revolutions in that range. Accordingly, a vehicle or the like which uses an internal combustion engine as a power source also preferably uses the most efficient possible revolution number range.

To use an efficient rotation range of the power source, power is transmitted using a transmission which allows for variable-speed running in a wide speed range from a low speed to a high speed. Known transmissions for vehicles or the like include stepped transmissions, which change the engagement between multiple gears having different gear ratios to change the gear ratio in steps, and stepless transmissions or continuously variable transmissions (CVTs), which can continuously change the gear ratio. Examples of known stepped transmissions include twin-clutch transmissions, which include two sets of a clutch and a gear set and previously place the next gear on standby to shift gears shortly, thereby improving transmission efficiency. For stepped transmissions, shifting to the next gear typically requires increasing the rotational speed for acceleration, and power transmission may be interrupted during a gear shift. This is problematic in terms of energy efficiency. Further, stepped transmissions cause shift shocks. For these reasons, stepless transmissions are preferred.

Known practical stepless transmissions include friction transmissions, including belt CVTs, in which a steel belt and two variable-diameter pulleys are combined to change the speed steplessly, and toroidal CVTs, in which a roller and a disc are combined. Other known stepless transmissions include hydrostatic and hydromechanical transmissions using a hydraulic pump and a hydraulic motor and transmissions using an electric motor such as those for use in hybrid vehicles (HVs) or electric vehicles (EVs).

Examples of stepless transmissions using gears include a stepless transmission disclosed in Patent Literature 1 in which a rotor including a protrusion and a rotor including thin teeth are engaged with each other. Other stepless transmissions using gears include conical biaxial stepless transmissions in which two conical helical gears are disposed in reverse orientation through a relay gear, as disclosed in Patent Literature 2. Other geared stepless transmissions include those using reciprocating vibration of multiple cranks, as disclosed in Patent Literature 3, and those using multiple noncircular gears, as disclosed in

Patent Literature 4.

### Citation List

### Patent Literature

Patent Literature 1: Japanese Unexamined Patent Application Publication No. Sho 53-004150
Patent Literature 2: Japanese Unexamined Patent Application Publication No. Hei 1-303358
Patent Literature 3: Japanese Unexamined Patent Application Publication (Translation of PCT Application) No. Hei 4-503991
Patent Literature 4: Japanese Unexamined Patent Application Publication No. Hei 2-271143

### SUMMARY OF INVENTION

### TECHNICAL PROBLEM

Friction CVTs such as belt transmissions can freely change the gear ratio both during acceleration/deceleration and during constant-speed running and therefore are preferred. However, such CVTs basically use friction and cause energy loss to maintain friction, and therefore are less efficient as individual transmissions and disadvantageous in a high-speed range or the like. Friction CVTs also cause slips and therefore are disadvantageous in handling high torques such as those of large vehicles and the like. Further, friction CVTs reduce drivability during acceleration or the like and therefore applications thereof are limited. Furthermore, these CVTs have problems with the durability of the oil or belt.

An HV includes both an internal combustion engine and an electric motor. Since an HV includes electric units such as a generator, a motor, and a battery, it has a large weight. Further, each electric unit does not have 100% efficiency. An HV is driven by electricity generated by the internal combustion engine. At this time, mechanical power is converted into electricity, which is then converted into mechanical power again and outputted. Accordingly, a loss occurs compared to direct transmission of mechanical power. For this reason, it is believed that an ordinary vehicle is more fuel efficient than an HV under conditions under which the vehicle can always run long at a number of revolutions which is the most efficient for the engine. In recent years, vehicles have been required to be downsized to reduce the environmental load. However, HVs have to include many large components which reduce comfortability or mountability, as well as have other problems, including high cost, the temporal reduction of the battery capacity, and the uneven distribution of the resources.

Hydraulic transmissions temporarily convert mechanical power into a hydraulic pressure, again convert the hydraulic pressure into mechanical power, and outputs it, and therefore tend to be less efficient than the direct transmission of mechanical power.

Transmissions using an electric motor, belt CVTs, and the like as described above individually allow for acceleration, deceleration, and constant-speed running in all speed ranges. For this reason, adding another engine to those transmissions or setting manual mode or the like therein would give an impression that efficiency decreases or such addition or setting is unnecessary, or a feeling of wrongness.

As described above, two-clutch transmissions must increase the rotational speed of the engine in order to shift to the next gear. Further, reducing the shift shock requires reducing the rotation of the engine and thus a time lag occurs until synchronization. On the other hand, an attempt to prevent a time lag results in a shift shock.

For the stepless transmission of Patent Literature 1, the number of teeth does not change even when the diameter changes. Accordingly, the rotation does not change. For the conical biaxial stepless transmission of Patent Literature 2, the movement speed of the relay gear engaged with the two conical helical gears varies. For this reason, the helical gears and relay gear are not engaged with each other.

Engines, transmissions, and like have also been required to be downsized. For transmissions, they have been required to reduce the axial or radial length thereof. Other stepless transmissions using gears have a complicated mechanism and a large size and therefore are less practical in terms of power transmission efficiency. For transmissions which do not allow for constant-speed running, the applicable Patent Literature does not describe any means or method to allow for constant-speed running.

As seen above, traditional transmissions have to increase the vehicle speed in order to shift to the next gear and have to increase the rotational speed of the engine in order to increase the vehicle speed, and thus have problems such as large power transmission loss and fuel efficiency reduction. Further, traditional transmissions cause a shift shock and have to increase or reduce the engine rotation in order to reduce the shift shock. Stepless transmissions have problems, including energy loss, high cost, poor comfortability, poor mountability, and inefficiency. Stepless transmissions using gears also have problems with energy efficiency and sizing, and the applicable Patent Literature does not describe any specific means or method to allow for constant-speed running. Accordingly, such transmissions are also impractical.

The present invention has been made in view of the foregoing, and an object thereof is to provide a geared stepless transmission that uses a traditional mechanical transmission but has less power transmission loss and thus increases environmental performance.

### Solution to Problem

To accomplish the above object, a first aspect of the present invention provides a geared stepless transmission. The geared stepless transmission includes: a geared continuously variable transmission, wherein the geared continuously variable transmission includes a spiral gear and a second gear; the spiral gear includes a first rotation shaft; the spiral gear has a row of approximately uniform teeth arranged at an equal pitch extending in a spiral fashion on a conical or disc-shaped outer peripheral surface thereof; a second gear includes a second rotation shaft disposed in parallel with a direction of a bus on the conical surface (pitch cone surface) of the spiral gear or in parallel with a radial direction of the disc-shaped surface of the spiral gear; the second gear is engaged with the spiral gear and disposed so as to be movable along a direction of the second rotation shaft; when the second gear rotates due to rotation of the second rotation shaft and moves while continuously changing an engaging position of the spiral gear and second gear, or when the second gear rotates due to rotation of the spiral gear and moves while continuously changing the engaging position, a radius of a pitch circle of the spiral gear continuously changes; driverconfigured to drive the spiral gear and the second gear; brake configured to brake the spiral gear and the second gear; switch configured to switch between the driver and the brake ; a power distribution mechanism configured to distribute power of a power source; a power combination mechanism configured to combine power outputted from the geared continuously variable transmission which has used the distributed power; a gear change mechanism configured to change a speed of power in steps and to output the resulting power; and power transmission path switch configured to switch between a power transmission path including the geared continuously variable transmission and a power transmission path not including the geared continuously variable transmission, the power transmission paths being paths from the power source to drive wheels. The geared stepless transmission is mounted on a vehicle. The expression "approximately uniform teeth" means that the teeth have the same face width or the like but differ in the diameter of the root circle. The expression "a row of teeth extends in a spiral fashion" means that a row of teeth extends in a spiral fashion as a single continuous row. In an existing gear, a row of teeth is a row of teeth on which the engagement position moves but returns to the original position. In the tornado gear, on the other hand, the teeth run at an equal pitch in a spiral fashion on the conical outer peripheral surface and therefore the engagement position moves in the axial direction and does not return to the original position. The second rotation shaft serves as a transmission element on the drive side and is preferably a shaft of a multi-step deceleration gear train.

According to a second aspect of the present invention, in addition to the configuration of the first aspect, the spiral gear of the geared continuously variable transmission transmits power by both forward rotation and backward rotation.

According to a third aspect of the present invention, in addition to the configuration of the first or second aspect, the spiral gear transmits power alternately by forward rotation and by backward rotation.

According to a fourth aspect of the present invention, in addition to the configuration of any one of the first to third aspects, at least one of the power distribution mechanism and the power combination mechanism is a differential mechanism. A differential mechanism refers to a mechanism in which multiple rotors or the like can be rotated relatively and exert differential effects on each other.

According to a fifth aspect of the present invention, in addition to the configuration of the fourth aspect, the differential mechanism is a planetary gear mechanism or differential gear mechanism. For example, the planetary gear mechanism includes relatively rotatable first to third rotors. The power combination mechanism connects the first rotor to the input shaft, connects the second rotor to the outside shaft, and connects the third rotor to the geared continuously variable transmission.

According to a sixth aspect of the present invention, in addition to the configuration of any one of the first to fifth aspects, multiple differential mechanisms are included. If one of the differential mechanisms is used as an element of the power distribution mechanism, the other differential mechanisms are used as the power combination mechanism. If the other differential mechanisms are used as an element of the power distribution mechanism, the one differential mechanism is used as the power combination mechanism. As is apparent from the specification, if one of the differential mechanisms is used as an element of the power distribution mechanism, the differential mechanism serves as a deceleration mechanism. That is, power is distributed. Another differential mechanism serves as the power combination mechanism.

According to a seventh aspect of the present invention, in addition to the configuration of any one of the first to sixth aspects, there is further included movement member configured to allow the second gear to move on the second rotation shaft by a force working on the second gear in an axial direction.

According to an eighth aspect of the present invention, in addition to the configuration of any one of the first to seventh aspects, a force working on the second gear in an axial direction is used to rotationally drive or rotationally brake the second gear.

According to a nine aspect of the present invention, in addition to the configuration of the seventh aspect, the movement member uses a hydraulic pressure and a wire mechanism.

According to a tenth aspect of the present invention, in addition to the configuration of any one of the first to ninth aspects, there is further included second gear position detector configured to detect a position of the second gear.

According to an eleventh aspect of the present invention, in addition to the configuration of any one of the first to tenth aspects, the spiral gear contains a hollow space or is filled with a lightweight material.

According to a twelfth aspect of the present invention, in addition to the configuration of the eleventh aspect, at least one of the power distribution mechanism and the power combination mechanism is disposed in the hollow space.

According to a thirteenth aspect of the present invention, in addition to the configuration of any one of the first to twelfth aspects, the gear change mechanism is connected to multiple clutch mechanisms configured to freely transmit or interrupt power of the power source.

According to a fourteenth aspect of the present invention, in addition to the configuration of any one of the first to thirteenth aspects, an electric motor is further included.

According to a fifteenth aspect of the present invention, in addition to the configuration of any one of the first to fourteenth aspects, an electric motor is used to rotationally drive at least one of the second rotation shaft and the spiral gear.

### Advantageous Effects of Invention

First we inferred the effects and progress of the invention. For example, in the box office, such as Magic (magic), the audience is the mysterious of the repertoire that is unfolding in front of the eye, but he greatly marvel to enjoy the impossibility of the big event, is easy to naturally clarify the species the (principle) rather, also if readily performance is not not hold.
But there is also when the seed is revealed, in such case, and I think that it probably did not know that of why extent this in the simplicity of its kind, and is intended to or got surprise up earlier also become small. Hidari-sama in the evaluation due to the effect of the technology, it tends to be that the assessment of the technology is greatly changed depending on whether the principles of the technology and the like are known or unknown. When the comparison with the prior art, it may or may not be able to readily apparent from the prior art, it is one of determining how to grant patent is that, to determine the differences of the present invention and the cited invention, "after even things like elimination of wisdom "is considered, or could can be determined by Oshihaka∼tsu the actual degree without a difficulty such as old and new drop attempts creative activities. The art, technology dealing with gear, etc., of quite a few other than the patent literature above, misidentification or mistake, not understanding, examples of presumed deficit is seen. As can be seen from the fact, the art can be presumed to be those likely to occur of false positives, etc. than you think of a person other than the creator.

As a means of an objective determination method for ejecting the subjective, such a concept of "degree of demand" Is not the be able to use. This means that even those suspected of seemingly easy occur, if it is "in the art of the invention, there is demand degree of the effect is more than a certain amount, and if the demand is observed that the span more than a certain period of time", ie, for example, if the long its effects have been sought, is clear that, to the Despite its had been strongly desired a long period (with effect) technology is disclosed have not been utilized, the technology it can be easily conceived to be because could not be readily apparent to, is that. If the above conditions, as well as setting the exclusive rights if easily occur, since such should be able to remove a large part of it due to adverse effects, if the examination side such application the burden of proof if the there are other factors by some in non-human side, and will be, it is quite legitimate as abstract and subjective, judgment means of fall into self-righteous judgment "contribute to the industrial development," let alone it is easy would inhibit "inventive step" , fact that I can say.

In view of the foregoing, advantageous effects of the present invention will be described. According to the first and fifteen aspects of the present invention, by including the means described in [0016] and [0030], the geared continuously variable transmission can be used for various purposes. Thus, the output rotation can be gradually increased by continuously changing the gear ratio of the transmission rather than by changing the engine rotation. As a result, for example, acceleration is possible with the engine rotation being constant, and constant-speed running is also possible. That is, a practical geared stepless transmission can be obtained. By practical application in concrete form the continuously variable transmission technology using such a gear-type, ie by a more efficient gear type regardless of the friction type, in the acceleration or the like that require the most energy in the vehicle since it is possible a substantially constant rotation of the engine even at maximum acceleration, and by continuously changing the gear ratio with increasing vehicle speed, always it is possible to accelerate while maintaining the maximum output generating rotational speed the number of revolutions of the engine, also when cruising down the engine rotation until the actual low output of barely necessary to cruise, "higher power at a very high level it is possible to achieve both the "low fuel consumption and low pollution" and performance ". Incidentally invention of claim 1, for example, and those using two methods of power transmission of the power transmission in the power transmission and reverse rotation of the positive rotation of the spiral column gear shown in Examples 1 and 2 below, spiral Although the meshing column gear and the second gear always power transmission using one or both forward rotation and reverse rotation, gear-type continuously variable to cover the entire speed range by extending the axial length of the spiral column gear it is an invention which is a group that is developing in those, such as the transmission mechanism. By the way the operation of the vehicle is also essential traveling constant speed together with the deceleration traveling, power train for them must be possible constant speed running.

The present gear-type continuously variable transmission mechanism is intended to function during acceleration or deceleration running and engagement position of the spiral column gear and the second gear has to be braked somewhere because something that functions by moving. If that practical use was placed on the underlying technical idea, the lack of these are merely mechanically incomplete, and if if easily than can occur about them, it is appropriate which can be configured. Have been forced to urgent support for load reduction of the global environment, that is well known. In the automotive industry which is located in the center of the industry, further in that it is attention from the viewpoint of global environmental issues, technology relates to a power train is one of the key technology, especially the continuously variable transmission technology, etc. by gear type of the above as such, it can be said that it is very important to put to practical use disclosed in a more concrete form. Assuming however not if practically possible configurations are made, for example, even if what constitutes those equivalent to the continuously variable transmission mechanism or even a gear type, have specific gear ratio or rotational speed or the like are mentioned when you view of the absence of examples and the like, said the such misconception and mistake, not understanding, presumed force lack, etc., are suspected of concrete or comprehensive non-understanding of the gear-type continuously variable transmission mechanism, to enable constant speed running for theWe did not reach to conceive of the technical idea should, alternatively, once it distributes the rotating power of the power source, and constant even led to conceive the technical idea spirit and did not lead to conceive of, or to temporarily allow constant speed running of the need to re-synthesized by decelerated for specific means and or comprehensive control and speed capable of running did not lead to occur, it is I can envision that. Or in a similar manner that a spiral column gear and the second gear of the gear-type continuously variable transmission mechanism needs to be braked, or did not reach even contemplated for the specific means and or comprehensive control, that but you can conceive. Or above about the need or to cut off or in conjunction them, or for their switching means, or for even images that control them generically, it could not be as easily conceive, it is possible to conceive that. By the inhibition factors, etc., or stereotypes, can not be configured by the inhibition factors such as prejudice and preconceptions, etc., it is possible to envision that.

Incidentally, if the present gear type CVT have a combination of gear mechanism completely different friction type CVT is technical idea, that a constant speed together with the acceleration and deceleration also be combined freely despite bother gear mechanism transmission ratio if the there is a thing, it is an object of the spirit and is to improve the power transfer efficiency during constant-speed running, alternatively, or better efficiency by narrowing the range of use of such pulleys in one stage, it is in widening the overall speed ratio range. The idea of the present invention for the purpose of itself that enables a constant speed running and therefore is totally different.

According to the first, fourth, fifth, eleventh, and twelfth aspects, for example, the power of the power source and the power outputted from the geared continuously variable transmission are combined and outputted. Thus, the largest possible gear ratio width obtained by the geared continuously variable transmission can be superimposed on the gears (or every other gear) in the gear change mechanism. For example, if the power is simply outputted to the gears for acceleration or deceleration, the number of the spiral gear trains becomes, for example, at least 60 or more in all speed ranges. If the power is repeatedly outputted for each gear, the number of revolutions at the large diameter (adjacent to the bottom of the conical spiral gear) is approximately 1. 5 times at best larger than that at the small diameter (e.g., from 2000 to 3000 revolutions). That is, the length in the axial direction must be increased. By distributing and combining the power, for example, the large diameter can be made four times larger than the small diameter with respect to the number of revolutions of the ring gear (carrier) of the planetary gear of the present embodiment. Thus, the large diameter can be increased, and the length in the axial direction can be reduced. Note that the symbol ">" in this specification is the same as a rightward arrow and means "from ... to ...".

According to the second, third, and sixth aspects of the present invention, the spiral gear transmits power alternately by forward rotation and backward rotation. Thus, if the transmission further includes multiple differential mechanisms, when one of the differential mechanisms is used as an element of the power distribution mechanism, the other differential mechanisms are used as the power combination mechanism. If the other differential mechanisms are used as an element of the power distribution mechanism, the one differential mechanism is used as the power combination mechanism. Thus, the spiral gear and second gear can be always engaged with each other, and the geared continuously variable transmission can be continuously used for various purposes. For example, acceleration running over multiple gears from a low-speed gear to a high-speed gear can be maintained.

According to the seventh, ninth, and tenth aspects of the present invention, there is included the movement member configured to move the second gear on the second rotation shaft by a force working on the second gear in an axial direction. The second gear position detection configured to detect the position of the second gear is also included. Thus, for example, during constant-speed running, the engaging position of the second gear and spiral gear can be moved to any position and placed on standby in preparation for acceleration.

According to the eighth and ninth aspects of the present invention, the force working on the second gear in the axial direction is used to rotationally drive or rotationally brake the second gear. Thus, torque loss can be prevented during acceleration. Further, such usage can become a substitute or assistance for the brake device using a friction plate or the like and thus the load on the friction plate or the like can be reduced.

According to the fourteenth and fifteenth aspects of the present invention, the electric motor is used. Thus, for example, the control of running on an uphill road or the like is facilitated.

### Brief Description of the Drawings

Fig. 1 is a schematic configuration diagram of a vehicle automatic transmission of a first embodiment of the present invention.
Fig. 2 is a skeleton diagram showing a geared stepless transmission according to the first embodiment of the present invention.
Fig. 3 is a diagram showing thrust loads applied to a conical spiral gear (hereafter referred to as the "tornado gear Tg") and a pinion gear shaft through a second gear (hereafter referred to as the "pinion gear Pg").
Fig. 4 includes schematic front and side views of the pinion gear Pg, tornado gear Tg, and pinion gear shaft of the geared continuously variable transmission.
Fig. 5 is a schematic diagram of a tornado actuator using a wire, a pulley, and a hydraulic device.
Fig. 6 is a diagram showing a power transmission path during acceleration running at a third-speed gear train G3.
Fig. 7 is a diagram showing a power transmission path during acceleration running at a first-speed gear train G1.
Fig. 8 is a diagram showing a power transmission path in a start/slow-speed gear train Gc.
Fig. 9 is a diagram showing a power transmission path during constant-speed running at the first-speed gear train G1.
Fig. 10 is an operation process diagram showing the time-series operations of the elements of a tornado gear unit in an acceleration > constant speed > acceleration process when power is outputted from first and second clutches C1 and C2.

### Description of Embodiments

Now, the present invention will be described using embodiments in which the present invention is applied to a vehicle.

### Embodiments

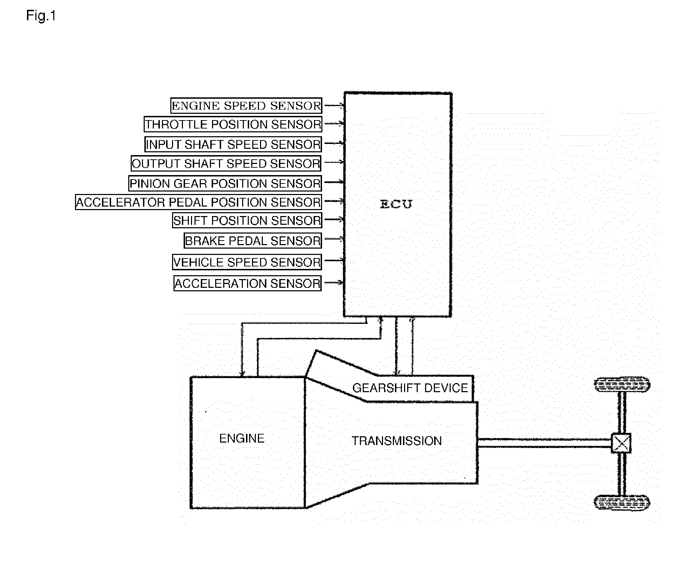

Fig. 1 is a schematic configuration diagram of an automatic transmission for vehicles according to a first embodiment of the present invention. Specifically, Fig. 1 shows an internal combustion engine (power source), the transmission, a gearshift device, and an electronic control unit (ECU). A rotation torque from the transmission is transmitted to drive wheels through a differential gear. Preferably, the engine can produce a high torque from low rotation.

The electronic control unit ECU includes a CPU, a ROM, a RAM, a backup RAM, and the like. The ROM is storing control programs, maps referred to when executing the control problems, and the like. The CPU performs an arithmetic operation on the basis of the control programs or maps stored in the ROM. The RAM is a memory that temporarily stores the result of an arithmetic operation performed by the CPU, data received from sensors, and the like. The backup RAM is a non-volatile memory that stores data or the like to be stored when the engine stops. These elements are connected together through a bus, as well as connected to input and output interfaces. Connected to the input interface of the ECU are a pinion gear position sensor that detects the position of a pinion gear Pg on a tornado gear Tg, an engine speed sensor, a throttle position sensor, an input shaft speed sensor, an output shaft speed sensor, an accelerator pedal position sensor, a shift position sensor that detects the position of a shift device, a brake pedal sensor, a vehicle speed sensor, an acceleration sensor, and the like. Signals from these sensors are inputted to the ECU. Connected to the output interface of the ECU are the gearshift device of the transmission, a throttle motor for opening or closing the throttle valve (not shown), and the like. The ECU performs various types of engine control, including the control of the throttle valve position of the engine, on the basis of output signals of the sensors. The ECT also changes the gears in the transmission (to be discussed later) or controls the movement of the pinion gear, by outputting control signals (hydraulic command values and the like) to the gearshift device of the transmission. (Note that the sensors of the gearshift device of the transmission are shown in an upper part of Fig. 1.)

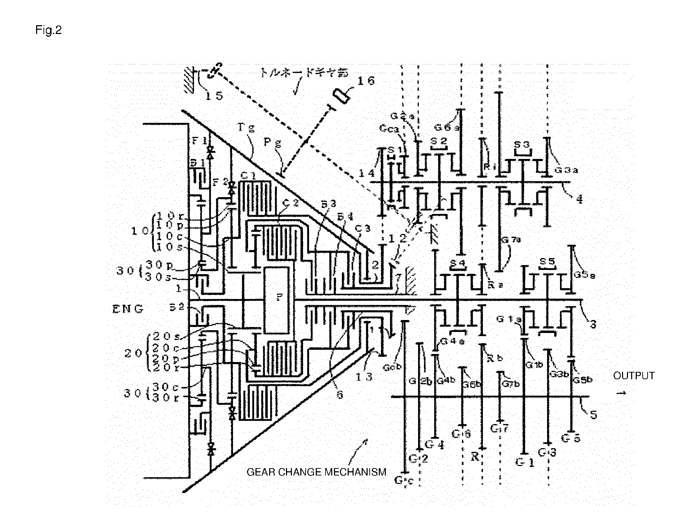

As shown in a skeleton diagram of Fig. 2, the transmission includes a tornado gear unit, a gear change mechanism, and the gearshift device. The tornado gear unit is included in a geared continuously variable transmission described in Claims, and includes a planetary gear corresponding to the differential mechanism in Claims. The tornado gear unit continuously changes the speed of the rotational power of the output shaft of the engine and outputs the resulting power. The gear change mechanism changes the rotational power outputted from the tornado gear unit in steps and outputs the resulting power to the differential gear and drive wheels. The gearshift device controls the tornado gear unit and gear change mechanism.

The gearshift device includes a shift actuator that shifts gears in the gear change mechanism, a tornado actuator that performs operations such as the movement (driving) or braking of the pinion gear, and a hydraulic circuit that controls the pressure of hydraulic oil supplied to such as the friction clutches of the actuator and tornado gear unit. The hydraulic circuit receives control signals from the ECU. Based on the control signals, the actuator and the like are drive-controlled, so that gear shifts in the transmission, the operation of the pinion gear, the control of the friction clutches, and the like are automatically performed.

The tornado gear unit includes a drive shaft 1 driven by the engine, the tornado gear Tg disposed on the outer peripheral surface of the tornado gear unit, a second input shaft 3 disposed coaxially with the drive shaft 1 in a rear portion of the tornado gear unit (the engine side of the tornado gear unit is referred to as the front side and the opposite side as the rear side) and protruding backward, a hollow tubular case 7 relatively rotatably supported on the outer peripheral surface of the second input shaft 3 and fixed to the housing, a hollow helical gear shaft 6 relatively rotatably supported on the outer peripheral surface of the tubular case 7, and a hollow first input shaft 2 relatively rotatably supported on the outer peripheral surface of the helical gear shaft 6. Thus, the tornado gear unit forms a threefold drive shaft. Disposed in the internal space of the tornado gear Tg are first to third single pinion gear-type planetary gear mechanisms 10, 20, and 30. The planetary gear mechanisms 10, 20, and 30 are differential gears capable of differentially rotating a first rotor, a second rotor, and a third rotor, respectively, are disposed centered on the drive shaft 1.

The tornado gear Tg includes, as engagement mechanisms, first to third clutches C1 to C3, first to fourth brakes B1 to B4, and two-way clutches F1 and F2.

The first planetary gear mechanism 10 includes a sun gear 10s (20s) fixed to the drive shaft 1, multiple planetary gears 10p engaged with the sun gear 10s (20s), a carrier 10c rotatably supporting the planetary gears, and a ring gear 10r having internal teeth engaged with the planetary gears 10p. The second planetary gear mechanism 20 is disposed behind the first planetary gear mechanism 10. It includes the shared sun gear 10s (20s), multiple planetary gears 20p engaged with the sun gear 10s (20s), a carrier 20c rotatably supporting the planetary gears, and a ring gear 20r having internal teeth engaged with the planetary gears 20p. The drive power of the engine is distributed to the first and second planetary gear mechanisms. The ring gear 10r is connected to a sun gear 30s which is disposed ahead of the sun gear 10s (20s) and adjacent to the outer peripheral surface of the drive shaft 1. The third planetary gear mechanism 30 includes the sun gear 30s, multiple planetary gears 30p engaged with the sun gear 30s, a carrier 30c rotatably supporting the planetary gears, and a ring gear 30r which has internal teeth engaged with the planetary gears 30p and is unrotatably fixed to the housing.

The carrier 10c can be connected to or disconnected from the first input shaft 2 by engaging or disengaging the first clutch C1, which is disposed adjacent to the outer peripheral surface of the drive shaft 1 and serves as a friction engagement element. The rotational power is transmitted to the gear change mechanism through an input shaft gear 13 fixed to the rear end of the first input shaft 2 and a countershaft gear 14 engaged with the input shaft gear 13. The carrier 10c is selectively connected to the housing by the second brake B2 and thus the rotation thereof is stopped. The ring gear 20r can be connected to or disconnected from the second input shaft 3 by engaging or disengaging the second clutch C2, which is disposed adjacent to the outer peripheral surface of the drive shaft 1 and serves as a friction engagement element. Thus, the rotational power is transmitted to the gear change mechanism. The ring gear 20r is selectively connected to the housing by the third brake B3 and thus the rotation thereof is stopped. The carrier 20c can be connected to or disconnected from the helical gear shaft 6 by engaging or disengaging the third clutch C3, which serves as a friction engagement element. Thus, the rotational power is transmitted to the pinion gear Pg and tornado gear Tg. The carrier 20c is also selectively connected to the housing by the fourth brake B4 and thus the rotation thereof is stopped. The ring gear 10r is connected to the tornado gear Tg through the two-way clutch F2, which prevents the forward rotation of the tornado gear Tg (the same rotation direction as that of the drive shaft 1) and allows for the backward rotation thereof. The carrier 30c is connected to the tornado gear Tg through the two-way clutch F1, which allows for the forward rotation of the tornado gear Tg and prevents the backward rotation thereof. It is also selectively connected to the housing by the first brake B1 and thus the rotation thereof is stopped. Accordingly, the rotation of the carrier 30c, sun gear 30s, and ring gear 10r is stopped simultaneously.

Disposed behind the sun gear 10s (20s) is a mechanical oil pump P. The oil pump P is rotationally driven by the drive shaft in order to generate a hydraulic pressure and to provide the hydraulic pressure to the hydraulic circuit. This hydraulic pressure serves as a source pressure for controlling the actuator, friction clutches, and the like or supplying a lubricant to the elements.

The first to third friction clutches C1 to C3 and first to fourth brakes B1 to B4 are hydraulic friction engagement devices whose engagement is controlled by a hydraulic actuator, such as multi-plate clutches or brakes. By exciting or de-exciting the linear solenoid valve of the hydraulic circuit or controlling the current, these clutches or brakes are engaged or disengaged, and the transient hydraulic pressure during engagement or disengagement or the like is controlled.

The present embodiment is an embodiment formed by applying the present invention to a twin-clutch automatic transmission which outputs the engine power by alternately switching between the first clutch C1 and second clutch C2. As shown in Fig. 2, the gear change mechanism includes the second input shaft 3, which is disposed coaxially with the drive shaft 1 and can be connected to or disconnected from the second clutch C2, and an countershaft 4 and an output shaft 5 which are disposed in parallel with the second input shaft 3, have different angles in the circumferential direction, and are spaced from each other. Thus, the gear change mechanism forms a triaxial gear train.

The second input shaft 3 is a rotation shaft that can be connected to or disconnected from the second clutch C2 and transmits the rotational power to respective drive gears G1a, G4a, and G5a of gear trains G1, G4, and G5 and a reverse drive gear Ra. The fourth-speed drive gear G4a, reverse drive gear Ra, first-speed drive gear G1a, and fifth-speed drive gear G5a are fitted to the second input shaft 3 in this order from the front side in such a manner that the respective gears can idle. Of these gears, G1a, G4a, and G5a are engaged and connected with driven gears G1b, G4b, and G5b, respectively. The reverse drive gear Ra is engaged and connected with the reverse idler gear Ri of the countershaft 4. The reversed rotational power is transmitted to a reverse driven gear Rb of the output shaft 5 engaged and connected with the reverse idler gear Ri. Note that in Fig. 2, thin dotted lines represent the engagement and connection (except for the dotted line of the tornado gear unit).

The countershaft 4 is a rotation shaft that can be connected to or disconnected from the first clutch C1 through the input shaft gear 13, which is disposed integrally with the rear end of the first input shaft 2, and through the countershaft gear 14, which is disposed integrally with the front end of the countershaft 4 and engaged with the input shaft gear 13. The countershaft 4 transmits the rotational power to the drive gears G2a, G3a, G6a, and G7a of the gear trains G2, G3, G6, and G7 and the start/slow-speed drive gear Gca. The start/slow-speed drive gear Gca, second-speed drive gear G2a, sixth-speed drive gear G6a, seventh-speed drive gear G7a, and third-speed drive gear G3a are fitted to the countershaft 4 in this order from the front side in such a manner that the respective gears can idle. The reverse idler gear Ri engaged and connected with the reverse drive gear Ra and reverse driven gear Rb is also fitted to the countershaft 4 in such a manner that the idler gear can idle. The drive gears G2a, G3a, G6a, G7a, and Gca are engaged and connected with driven gears G2b, G3b, G6b, G7b, and Gcb, respectively.

The start/slow-speed driven gear Gcb, second-speed driven gear G2b, fourth-speed driven gear G4b, sixth-speed driven gear G6b, reverse driven gear Rb, seventh-speed driven gear G7b, first-speed driven gear G1b, third-speed driven gear G3b, and fifth-speed driven gear G5b are provided integrally with the output shaft 5 from the front side. The driven gears G1b to G7b, Rb, and Gcb are engaged and connected with the drive gears G1a, G4a, and G5a of the second input shaft 3, the drive gears G2a, G3a, G6a, and G7a of the countershaft 4, the start/slow-speed drive gear Gca, and the reverse idler gear Ri, respectively. The rotational power is transmitted to the drive wheels through the differential gears.

A first synchronizer S1 is a device for switching between an idle state, in which the power is not transmitted, and a start/slow-speed gear Gc. It synchronizes the idle state and the rotational speed to selectively connect the start/slow-speed drive gear Gca to the countershaft 4 so that the gear Gcs rotates integrally with the countershaft 4.

A second synchronizer S2 is a device for shifting between the second speed and sixth speed. It synchronizes the respective rotational speeds to selectively connect the second-speed drive gear G2a or sixth-speed drive gear G6a to the countershaft 4 so that the selected drive gear rotates integrally with the countershaft 4.

A third synchronizer S3 is a device for shifting between the seventh speed and third-speed. It synchronizes the respective rotational speeds to selectively connect the seventh-speed drive gear G7a or third-speed drive gear G3a to the countershaft 4 so that the selected drive gear rotates integrally with the countershaft 4.

A fourth synchronizer S4 is a device for shifting between the fourth-speed and a reverse gear R. It synchronizes the respective rotational speeds to selectively connect the fourth-speed drive gear G4a or reverse drive gear Ra to the second input shaft 3 so that the selected gear rotates integrally with the second input shaft 3.

A fifth synchronizer S5 is a device for shifting between the first speed and fifth speed. It synchronizes the respective rotational speeds to selectively connect the first-speed drive gear G1a or fifth-speed drive gear G5a to the second input shaft 3 so that the selected gear rotates integrally with the second input shaft 3.

Each synchronizer S has a synchronization sleeve that is connected (spline-fitted) to the corresponding drive shaft and is movable in the axial direction. When the shift actuator (not shown) moves the synchronization sleeve from the neutral position axially forward or backward, the synchronization sleeve connects with the corresponding drive gear so that one of the gear trains G1 to G7 and the like is selectively established. As used herein, the expression "a gear train is established" means that the drive power (first clutch C1, second clutch C2, etc.) is allowed to be transmitted to the output shaft 5 through one of the gear trains G1 to G7, Gc, and R. When the tornado gear unit transmits the drive power to the gear change mechanism and a predetermined gear train is established in the gear change mechanism, the vehicle can be driven by the gear train having a predetermined gear ratio.

Note that the number of shafts, the number of gear trains, the gear ratios, the positions of the gear trains, and the like are illustrative only, and other designs, configurations, and the like are possible.

### Operations of Spiral Gear (Tornado Gear Tg) and Second Gear (Pinion Gear Pg)

As described above, when the power is transmitted in a vehicle or the like, the power is transmitted in steps using a gear change mechanism in order to use an efficient rotation range of the power source. The reason is that the tension (tractive force) is reduced and the efficiency is increased by using multiple gears rather than by "pulling" a single gear by increasing the engine speed. Further, by increasing the number of gears so that the speed can be ultimately continuously changed, the efficiency is further increased.

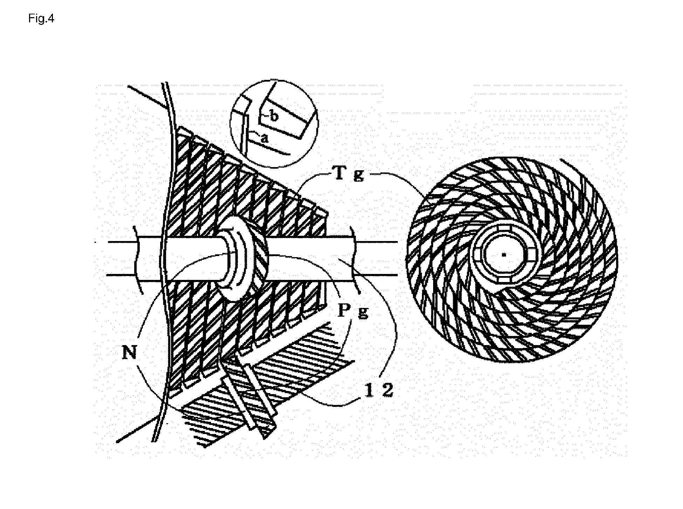

In the tornado gear Tg, as shown in Fig. 4, a row of approximately uniform teeth arranged at an equal pitch extends in a spiral fashion on the outer peripheral surface of a cone containing a hollow space. Engaged with the tornado gear Tg is the pinion gear Pg. The pinion gear Pg is movably disposed along the direction of a pinion gear shaft Ps, which is a rotation shaft parallel with a bus on the conical surface (pitch cone surface) of the tornado gear Tg. Accordingly, the teeth of the tornado gear Tg are formed in such a manner that the pinion gear Pg can move (formed in such a manner that the angle of the teeth with respect to the shaft and pinion gear Pg is always kept constant).

The pinion gear Pg has, on the inner peripheral surface thereof, protruding teeth (helical grooves). It also has, on the outer peripheral surface thereof, a nut N which is screwed (fitted) into the pinion gear shaft Ps, which is a screw shaft having multiple helical grooves. Thus, the rotation of the pinion gear Pg relative to the pinion gear shaft Ps is prevented, whereas the pinion gear Pg can move in the axial direction. As shown in Fig. 2, the pinion gear shaft Ps is pivotally supported by an arm 15 fixed to the housing. The pinion gear shaft Ps has, at the rear end thereof, a shaft gear 12 and thus is engaged and connected with a bevel gear 11. For example, the rotational power from the engine is transmitted to the bevel gear 11 > shaft gear 12 > pinion gear shaft Ps > pinion gear Pg > tornado gear Tg. While the connected gears and shaft from the bevel gear 11 to the tornado gear Tg form a geared continuously variable transmission, other connection forms may be employed.

For example, the tornado gear Tg and pinion gear Pg operate as follows: when the pinion gear Pg is rotated, the engaging position is moved from the bottom of the tornado gear Tg, which has a large diameter, to the peak thereof, which has a small diameter, and the rotational speed of the tornado gear Tg is continuously changed from a low speed to a high speed. A typical gear has teeth arranged on the cylindrical outer peripheral surface thereof. On the other hand, in the tornado gear of the present embodiment, a row of teeth extends on the conical side surface in a spiral fashion when seen from the peak of the cone, and the teeth are arranged in a manner gradually shifted approximately in the tooth trace direction, that is, in the axial direction. When the pinion gear gradually moves in the direction of the shaft (Ps) (while rotating), the engaging position also moves in the axial direction. The set of the gears forms intersecting shafts where the shafts of the tornado gear and pinion gear intersect each other. As the engaging position moves, the intersection (peak) also moves, and the center-to-center distance between the respective gears changes. Accordingly, as the engaging position moves in the axial direction, the pitch circle of the tornado gear continuously changes. While the rotational speed ratio of a typical gear set is constant, that of this gear set is continuously variable.

The tornado gear Tg and pinion gear Pg form a bevel gear set. Of course, the cone angle of the teeth of the pinion gear Pg is not parallel with the pinion gear shaft Ps. Further, as shown in Fig. 4, the pinion gear Pg is engaged with the tornado gear Tg while always keeping a constant angle (cone angle), and moves the direction of the pinion gear shaft Ps. Accordingly, the engaging position is not shifted in the direction of the shaft. Alternatively, thrust may be produced on the low-speed side (the large-diameter side of the tornado gear Tg) and, as shown in a circle in Fig. 4, a slope for facilitating engagement may be formed on the contact surface of the low-speed side of the gear.

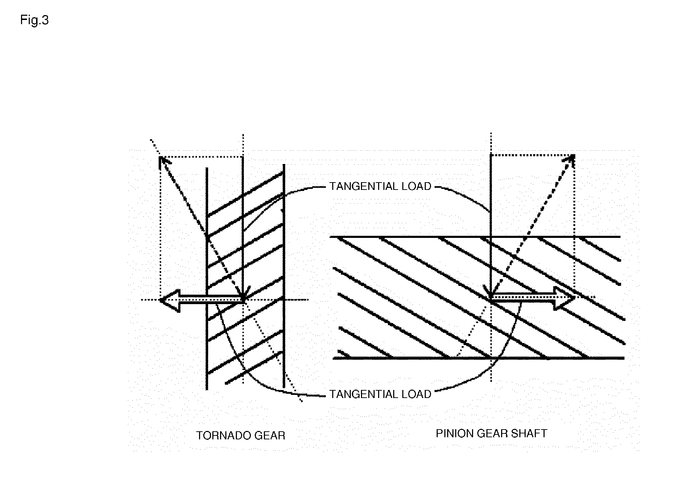

The tornado gear Tg and pinion gear Pg forming a gear set are helical gears (the tooth trace may be any of a straight line and a curve). As shown in Fig. 3, a thrust load applied to the pinion gear Pg due to the engagement with the tornado gear Tg and a thrust load applied thereto due to the engagement with the pinion gear shaft Ps cancel out each other. Thus, the tooth trace angle, strength, engagement efficiency, and silence can be increased without reducing the transmission efficiency.

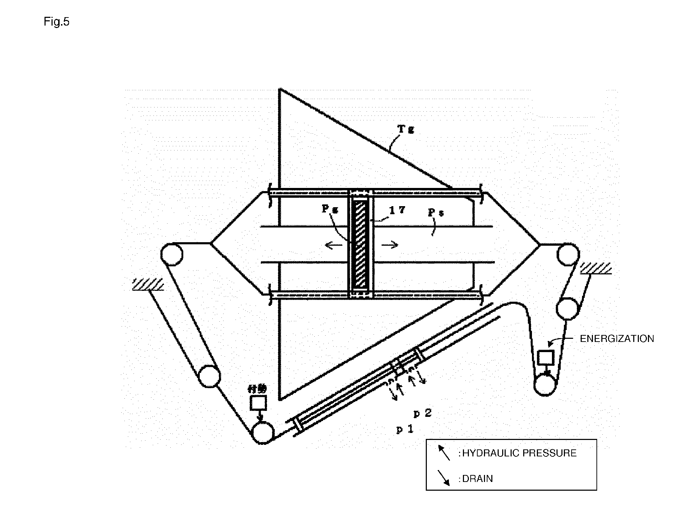

The position of the pinion gear Pg is adjusted, for example, by detecting the position of the pinion gear Pg using a pinion gear position sensor 16 corresponding to second gear position detectionmember, feedback-controlling the tornado actuator on the basis of the detection result, and pressing the side surface of the pinion gear Pg using a fork 17 or the like. Fig. 5 is a schematic diagram showing an example of an actuator using a wire, a pulley, and a hydraulic device and corresponding to movement member. The tornado actuator is formed by combining hydraulic means, motor-driven means, and like and a gear mechanism, a link mechanism, a cam mechanism, a ball screw mechanism, a pulley mechanism, a wire mechanism, and the like.

As described above, in a gear having teeth diagonal to the axial direction, such as a helical gear, a tangential load is divided into an axial load (thrust load) through the teeth. Conversely, a thrust load can be divided into a tangential load through the teeth. A traditional transmission only connects rotational movements. On the other hand, the present continuously variable transmission is a screw movement mechanism in which the pinion gear Pg and pinion gear shaft Ps can convert a linear movement into a rotational movement and vice versa. Since the present continuously variable transmission includes a linear movement, for example, a force applied to the pinion gear Pg in the axial direction can be used to brake or drive the pinion gear Pg or tornado gear Tg.

For example, in braking using an electric motor as a generator, it takes a predetermined braking time to convert braking energy into electricity. Conversion into thermal energy is an only method for braking in a short time. Actually, braking of the rotational movement of power in a short time is achieved by converting braking energy into thermal energy using friction means such as a brake pad. In this case, wear or the like of the pad surface due to heat or the like must be considered. For example, in the case of an automatic vehicle or the like using planetary gears, if heat being monitored by a thermal sensor exceeds the allowable range, a gear shift or the like is restricted. On the other hand, braking a linear movement only requires applying a force linearly. Accordingly, the contact surface to which the force is applied may be, for example, a wet, flat surface. Most of energy generated from a screw motion, which includes a rotational motion, is kinetic energy, and thermal energy is only partial, as in energy generated when objects collide with each other. If the force applied can be adjusted, the durability of both members can be improved by efficiently sharing the load based on thermal energy and the load based on kinetic energy.

In the above example, flat surfaces as described above may be formed on the side surface of the pinion gear Pg and the fork, and a bearing or the like capable of contacting or separating the flat surfaces by energization may be fitted to the surfaces.

Thus, the load on the brake member due to wear or the like can be significantly reduced, and the tornado gear Tg and pinion gear Pg can be used frequently for purposes such as braking.

Note that when the power of the power source is not being transmitted to the drive wheels through the spiral gear, for example, the power of the power source may be used through another route by rotating the pinion gear Pg or tornado gear Tg as movement member, or the pinion gear Pg may be moved by connecting the electric motor thereto.

While the conical tornado gear Tg has been described in the present embodiment, a disc-shaped tornado gear Tg may be used. In this case, the disc-shaped tornado gear Tg differs from the conical tornado gear Tg, for example, in that the engaging position of the tornado gear Tg and pinion gear Pg moves in the radial direction of the disc as the pinion gear Pg moves.

Alternatively, the geared continuously variable transmission may include a first gear that includes a first rotation shaft and has a sectional shape which continuously changes along the direction of the rotation shaft and a second gear that includes a movable second rotation shaft and is engaged with the first gear and disposed so as to be slidable along the direction of the second rotation shaft. When the second gear rotates due to the rotation of the second rotation shaft and moves while continuously changing the engaging position of the first gear and second gear, or when the second gear rotates due to the rotation of the first gear and moves while continuously changing the engaging position, the radius of the pitch circle of the first gear may continuously change.

### Geared Stepless Transmission

Geared transmissions are the best of all types of mechanical transmissions and have been used in various forms from the past until the present time. However, geared transmissions have been used with the gear ratio of two gears fixed. For this reason, for example, friction transmissions and the like, including those using a belt and a pulley, have been devised as so-called stepless transmissions, which can continuously change the gear ratio. However, friction transmissions are less efficient and therefore geared transmissions have been sought. Unfortunately, although freely switching between acceleration/deceleration and constant speed, as in friction stepless transmissions, is possible by using a movable gear or the like, such a technology is far from practical use and is almost impossible. A geared stepless transmission has been, so to speak, a missing link among transmissions. In view of the foregoing, the inventor has realized a geared stepless transmission by combining (i) a gear set serving as a geared continuously variable transmission in which (a) an spiral gear (tornado gear Tg) in which teeth are arranged on the outer peripheral surface of a cone in a spiral fashion and which is disposed around the output shaft of the engine and (b) a small gear (pinion gear Pg) movable using a shaft parallel with a bus as a central axis are engaged with each other and (ii) a typical stepped gear change mechanism. Further, this geared stepless transmission employs a method by which every other gear (skip shift) superimposes the geared continuously variable transmission. For example, during acceleration running, the first-speed, third-speed, fifth-speed, and seventh-speed gears superimpose (combine) power whose speed has been continuously changed; during constant-speed running, the power transmission path change means prevents continuous gear changes and thus all the gears maintain the gear ratios thereof. Details will be described later. Thus, processes performed by the gears during acceleration running or constant-speed running are connected together. As a result, more practical running can be realized.

Specifically, the power of the power source is distributed (divided) by the first and second planetary gear mechanisms 10 and 20, which are power distribution mechanisms (or power combination mechanisms) and are differential mechanisms; one of the distributed power portions is outputted to the gear set composed of the tornado gear Tg (spiral gear) and pinion gear Pg connected to one of the planetary gear mechanisms and serving as the geared continuously variable transmission; the other distributed power portion is outputted to the other planetary gear mechanism; the rotation ratio of the one power portion is changed continuously by the gear set as described above; and the one power portion whose speed has been continuously changed outputted from the gear set is re-combined with the other distributed power portion by the other planetary gear mechanism, which is a power combination mechanism, and then outputted to the gear change mechanism.

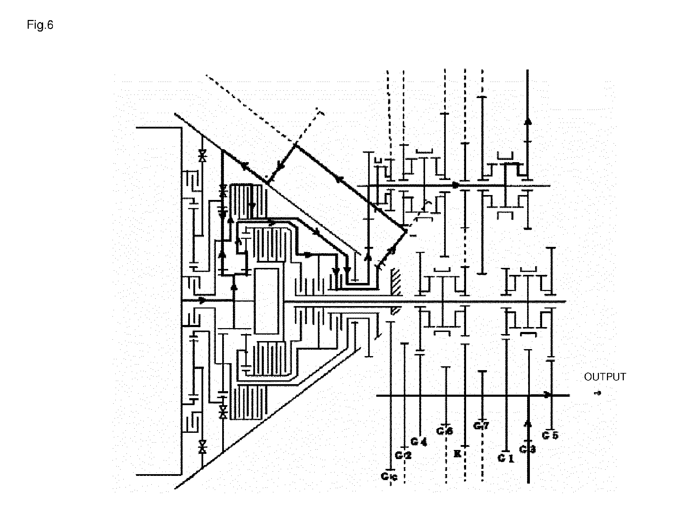

Fig. 6 shows a more specific power transmission path. The rotational power of the power source (engine) is distributed from the sun gear 10s (20s) to the planetary gear 10p of the first planetary gear mechanism 10 and the planetary gear 20p of the second planetary gear mechanism 20. In the second planetary gear mechanism 20, the ring gear 20r is fixed. One of the distributed rotational power portions is transmitted from the carrier 20c through the planetary gear 20p to the clutch C3 > helical gear shaft 6 > bevel gear 11 > shaft gear 12 > pinion gear shaft Ps > pinion gear Pg > tornado gear Tg. As described above, the engaging position of the pinion gear Pg and tornado gear Tg moves from the large-diameter bottom of the tornado gear Tg to the small-diameter peak thereof (this movement will be referred to as "the pinion gear Pg falls"). As the engaging position moves, the rotational speed of the tornado gear Tg continuously changes from a low speed to a high speed. In the present embodiment, the gear ratio of the sun gear 10s (20s) to the carrier 20c (=input rotational speed/output rotational speed) is set to approximately 3, and the gear ratio of the pinion gear Pg to the tornado gear Tg is set to approximately 4 at the maximum (the large-diameter position). The diameter of the tornado gear Tg in the final engaging position on the small-diameter side is set such that the number of revolutions at the diameter (position) becomes approximately the same as that of the bevel gear 11, that is, that of the carrier 20c. Accordingly, the number of revolutions (rotational speed) of the tornado gear Tg is gradually increased toward the number of revolutions of the carrier 20c. For example, if the number of revolutions of the engine is 1800 rpm, that of the carrier 20c is about 600 rpm. Accordingly, the number of revolutions of the tornado gear Tg is gradually increased from approximately 150 rpm to 600 rpm.

At this time, the tornado gear Tg is rotating forward; the two-way clutch F1 is idling; and the two-way clutch F2 is being controlled so that it prevents the forward rotation of the tornado gear Tg. The rotational power is then transmitted through the two-way clutch F2 to the ring gear 10r of the first planetary gear mechanism 10 (the same rotation as that of the tornado gear Tg), combined with the other rotational power portion distributed by the sun gear 10s (20s), and outputted from the carrier 10c through the first clutch C1 to the gear change mechanism. More specifically, if the ring gear 10r is fixed (if it is fixed to 0), the gear ratio of the sun gear 10s (20s) to the carrier 10c is set to approximately 4, and the number of revolutions of the carrier 10c is started from 450 rpm. After a lapse of time, the power of the ring gear 10r transmitted from the tornado gear Tg (150 rpm>600 rpm) is combined with the other rotational power portion and thus gradually increased from 450 rpm to 900 rpm and then outputted. This will be described later. The gear ratio of the input shaft gear 13 to the countershaft gear 14 is set to 0.5. Accordingly, the rotational speed is doubled from 900 rpm to 1800 rpm, and the resulting rotational power is outputted to the countershaft 4.

In this case, the number of revolutions of the tornado gear Tg is increased from approximately 150 rpm to 600 rpm. This means that continuously rotating the diameter of the tornado gear Tg in the final engaging position on the small-diameter side for 1 min requires a distance corresponding to 450 revolutions. If the acceleration time (corresponding to 2 gears in the present embodiment) during this period is 5 sec., the number of revolutions required is 450÷(60÷5), that is, about 37 revolutions. That is, the movement distance of the engaging position of the tornado gear Tg and pinion gear Pg (from one end to the other end) is a distance corresponding to the circumference of the tornado gear Tg in the final engaging position (on the small-diameter side) multiplied by 37 revolutions. The cone angle and axial length of the tornado gear Tg are set based on the output of the engine.

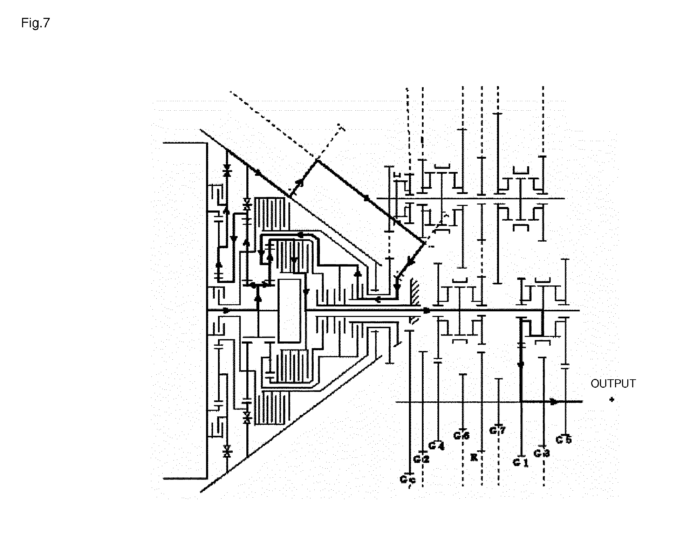

Since the tornado gear Tg and pinion gear Pg are always engaged with each other, both the forward rotation and backward rotation are used. As shown by a power transmission path in Fig. 7, the rotational power of the engine is distributed from the sun gear 10s (20s) to the planetary gear 10p of the first planetary gear mechanism 10 and the planetary gear 20p of the second planetary gear mechanism 20. The carrier 10c of the first planetary gear mechanism 10 is fixed. One of the distributed rotational power portions is transmitted as backward rotational power from the ring gear 10r to the sun gear 30s of the third planetary gear mechanism 30. Since the ring gear 30r is fixed, the rotational power is transmitted from the carrier 30c to the two-way clutch F1 while remaining backward rotational power. The two-way clutch F1 is idling, and the two-way clutch F2 is being controlled so that it prevents the forward rotation of the tornado gear Tg. The rotational power is transmitted through the two-way clutch F1 to the tornado gear Tg. In the present process, reverse to the above process, the rotational power is transmitted from the tornado gear Tg to the pinion gear Pg. After the above process, the engaging position of the pinion gear Pg and tornado gear Tg lies at the small-diameter peak of the tornado gear Tg. In the present process, on the other hand, the engaging position is moved from the small-diameter peak to the large-diameter bottom (this movement will be referred to as "the pinion gear Pg rises"). As the engaging position moves, the rotational speed of the pinion gear Pg continuously changes from a low speed to a high speed. The rotational power is transmitted through a path reverse to that in the above process, that is, through the tornado gear Tg > pinion gear Pg > pinion shaft Ps > shaft gear 12 > bevel gear 11 > helical gear shaft 6 > clutch C3 > carrier 20c, and then reaches the carrier 20c. At this time, the rotation of the carrier 20c is backward rotation. The rotational power is then combined with the other power portion (forward rotation) distributed by the sun gear 10s (20s), and outputted from the ring gear 20r to the gear change mechanism as backward rotational power. Specifically, the gear ratio of the sun gear 10s (20s) to the ring gear 10r is set to approximately 3, and the gear ratio of the sun gear 30s to the carrier 30c (ring gear 30r is fixed) is set to approximately 4. If the number of revolutions of the engine is 1800 rpm, that of the ring gear 10r is 600 rpm. Accordingly, the number of revolutions of the sun gear 30s is also 600 rpm, and that of the carrier 30c is 150 rpm. Thus, the tornado gear Tg is rotated at a constant speed of 150 rpm, and the rotational power thereof is transmitted to the pinion gear Pg. The gear ratio of the pinion gear Pg to the tornado gear Tg is changed from 1 to 0.25, and the number of revolutions of the pinion gear Pg is changed from 150 rpm to 600 rpm.

If the carrier 20c is fixed (to 0), the gear ratio of the sun gear 10s (20s) to the ring gear 20r is set to approximately 2. The number of revolutions of the ring gear 20r is started from 900 rpm. The power (from 150 rpm to 600 rpm) of the carrier 20c transmitted from the pinion gear Pg is combined with the other power portion distributed by the sun gear 10s (20s) and thus gradually increased from 900 rpm to approximately 1800 rpm, and then outputted.

In the present embodiment, the power source (engine) > sun gear 10s (20s) > second planetary gear mechanism 20 > clutch C3 > helical gear shaft 6 > bevel gear 11, or the engine > sun gear 10s (20s) > ring gear 10r > third planetary gear mechanism 30 > two-way clutch F1 > tornado gear Tg correspond to driver of Claim 1.

As seen above, in the present embodiment, in both processes, the number of revolutions (rotational speed) is doubled from 900 rpm (1800 rpm at output from the engine) to approximately 1800 rpm, and the power having such a rotational speed is outputted from the tornado gear unit to the gear change mechanism. In the present embodiment, the gear ratio of the next gear is set such that the doubled number of revolutions (1800 rpm), which is the largest possible number of output revolutions of the tornado gear Tg on one way, becomes 900 rpm at the next gear, that is, the gear ratio becomes 1/2. The number of revolutions of the engine is constant. Preferably, the starting gear ratio of the tornado gear Tg is as large as possible. Accordingly, the initial position of the next gear (the last position of the current gear) of the tornado gear Tg is preferably the extreme end. For purposes such as the protection of the teeth, the initial position of the tornado gear Tg (next gear) may be fine-adjusted by adjusting the gear ratio of the next gear. For example, if the step ratio is 0.5 and the gear ratio of the first-speed gear is 4, that of the next gear becomes 2. If the second-speed gear is used, there is a large difference in the number of revolutions. Accordingly, the third-speed gear is used. If no running resistance is considered, the gear ratios of the first-speed gear, third-speed gear, fifth-speed gear, and seventh-speed gear are set to 4, 2, 1, and 0.5, respectively. The gear ratios of the second-speed gear, fourth-speed gear, and sixth-speed gear are set to any gear ratios. There may be employed other forms, including a form in which additional gears are provided in the high speed range.

The elements of the path leading to the tornado gear Tg are required to have sufficient strength, stiffness, and size to endure the respective torques. Since the third planetary gear mechanism 30 and pinion gear Pg lie in a space with enough room, they can be increased in size. Further, the torques applied to these elements are distributed (halved) ones and therefore there is no significant problem.

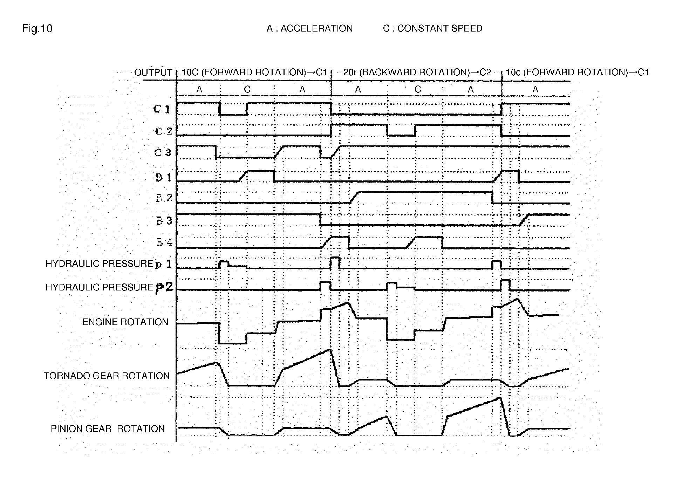

Next, referring to Figs. 6 to 10, a control process based on the running state of the vehicle will be described.

### Start and Slow-Speed Running

In the present embodiment, during the stop of the vehicle and during the process from the stop of the engine through stamping on the brake pedal and the start of the engine to idling, the gear change mechanism has the first-speed gear train G1 established on the second input shaft 3 and the start/slow-speed gear train Gc established on the countershaft 4. In the tornado gear unit, the first clutch C1, second clutch C2, and clutch C3 are disengaged and thus a neutral state is established. Accordingly, the engine is allowed to idle.

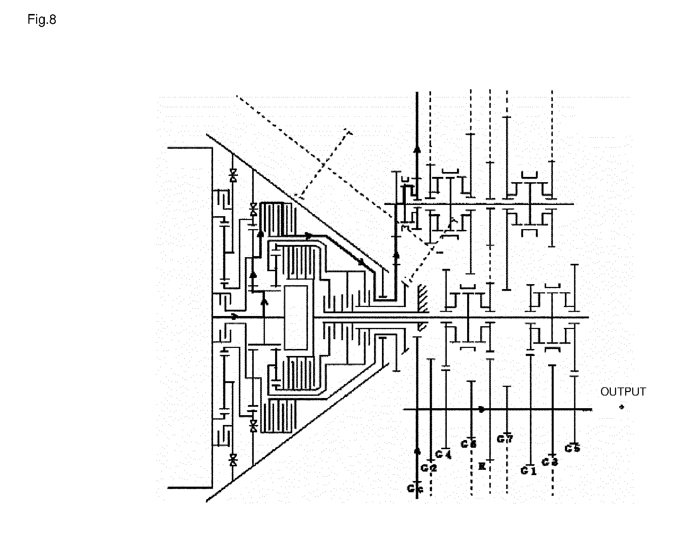

In the present transmission, as shown in Fig. 2, the tornado gear unit serves as a main (sub) transmission, and high gear ratios are previously set with respect to the gears thereof. Thus, a super-low gear can be set in the gear change mechanism. The gear ratio of the start/slow-speed gear Gc is set to a higher value than that of the first-speed gear so that a high torque is produced for slow-speed running, start on slope, or the like. If, in the above state, stamping on the brake pedal is released and the driver's foot leaves the brake pedal, the first clutch C1 is slowly engaged by half clutch or the like, and the brake B1 is engaged (the ring gear 10r is fixed). As shown in Fig. 8, the power of the engine is transmitted through the start/slow-speed gear train Gc to the drive wheels. Thus, the vehicle starts.

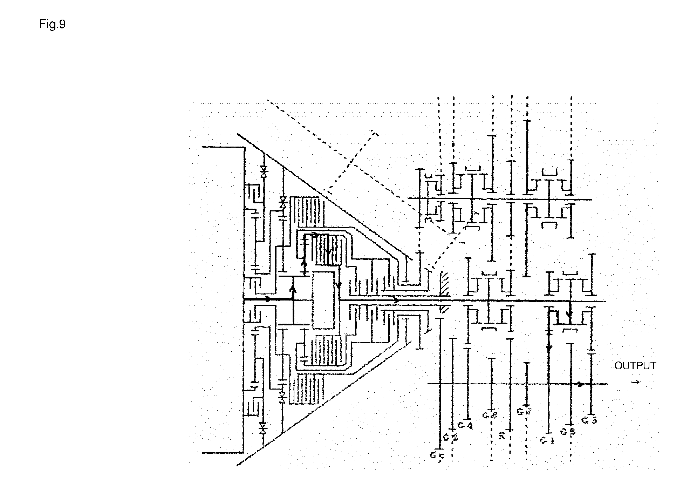

In the first-speed gear, as shown in Fig. 9, the first clutch C1 is disengaged; the second clutch C2 is engaged; and the brake B4 is also engaged (the carrier 20c is fixed). Thus, the vehicle runs at the first-speed gear.

### Acceleration and Gear Shift

In the present embodiment, the state in which a foot is put on the accelerator pedal and the amount of stamping is approximately 0 is defined as a0, and a predetermined amount of stamping is defined as a1. A range of 0 to a1 is defined as a constant-speed running range, and a range of a1 or more is defined as an acceleration range. If the amount of stamping on the accelerator pedal exceeds a1, the ECU determines that acceleration has been requested and then performs acceleration. Referring to Fig. 7, for example, when the vehicle is running constantly at the first speed with the second clutch C2 and brake B4 engaged, if acceleration (first-speed to second-speed) is performed using the first-speed gear train, the second brake B2 is engaged; the brake B4 is disengaged; and the clutch C3 is engaged. Thus, as described above, the rotational power of the engine is distributed by the sun gear 10s (20s) to the planetary gear 10p of the first planetary gear mechanism 10 and the planetary gear mechanism 20p of the second planetary gear mechanism 20. One of the distributed rotational power portions is transmitted to the tornado gear Tg as backward rotational power, so that the pinion gear Pg rises. The rotational speed of the pinion gear is continuously changed from a low speed to a high speed and then the rotational power reaches the carrier 20c. The rotational power is then combined with the other power portion (forward rotation) distributed by the sun gear 10s (20s), and outputted from the ring gear 20r to the gear change mechanism as backward rotational power. Thus, the first-speed gear train performs acceleration. As seen above, the power transmission path during energy saving mode acceleration of the present embodiment is the power source (engine) > (conical spiral train) geared continuously variable transmission > gear change mechanism > output member.

If the acceleration being performed by the first-speed gear train is continuously maintained, the third-speed gear train performs acceleration (third-speed to fourth-speed). In this case, first, in order to temporarily output the power of the engine from the carrier 10c to the first clutch C1, the first clutch C1 is engaged; the second brake B2 is disengaged; and the first brake B1 is engaged. Thus, the distributed power is transmitted through the first clutch C1 to the countershaft 4. The rotational speed of the countershaft 4 is the same as that of the third-speed gear train from the drive wheel side. For this reason, a rotation matching step can be performed immediately before the gear shift. The first clutch C1 is disengaged temporarily and synchronized. The third-speed gear train is established, thereby completing pre-shift. The power transmitted from the carrier 30c to the tornado gear Tg through the two-way clutch F1 is interrupted by the neutralized two-way clutch F1. Thus, the tornado gear T rotates inertially. At this time, the acceleration may be continued without interruption by applying a high hydraulic pressure P1 to the tornado actuator and rotationally driving the pinion gear Pg by the force of the tornado actuator in the axial direction as described above (until the gear shift is made due to the switching between the clutches). Subsequently, the second clutch C2 is disengaged, and the first clutch C1 is re-engaged (double-clutch). Thus, the clutches are switched, and the shift to the third-speed gear is made.

That is, although the present transmission is a two-clutch transmission, it can match the rotations at the clutches, as well as can match the rotations when the gear train is established. Accordingly, for example, if applications are limited to automatic transmissions without including manual transmissions, there is almost no need for a synchronizer along with a gear shift (to be discussed later), and a dog clutch only has to be provided. This is advantageous in terms of weight, capacity, cost, and the like.

As described above, while the rotational speed is doubled based on the first-speed gear ratio and the resulting power is outputted to the drive wheels, the number of revolutions of the engine does not change. Accordingly, the rotational speed based on the third-speed gear ratio of this (constant) number of revolutions of the engine is the same as the rotational speed from the drive wheel side, and a gear shift is made instantly without shift shock. It is not necessary to reduce the number of revolutions of the engine, unlike in typical transmissions such as twin-clutch transmissions. Subsequently, the hydraulic pressure P1 is released, and a hydraulic pressure P2 for braking the tornado gear Tg (pinion gear Pg) is applied (accordingly, in the present embodiment, the tornado actuator operated using a hydraulic pressure or the like corresponds to brake of Claim 1; alternatively, the brake B4 may be used as brake by engaging and braking it). After the tornado gear Tg is braked, the hydraulic pressure P2 is released. Subsequently, as shown in Fig. 6, the first brake B1 is disengaged; the third brake B3 is engaged; and the power distributed by the second planetary gear mechanism 20 is transmitted to the pinion gear Pg. Thus, the pinion gear Pg falls. The rotational speed of the tornado gear Tg is continuously changed from a low speed to a high speed, and the resulting rotational power is transmitted through the two-way clutch F2 to the first planetary gear mechanism 10. During the period from when the tornado gear Tg (pinion gear Pg) is braked to when it starts (at 150 rpm), the number of revolutions of the engine is electronically controlled along with the inertia torque so that the acceleration is not interrupted. Subsequently, the third brake B3 is engaged; the number of revolutions of the engine is restored to the original constant number of revolutions; and the resulting rotational power is distributed to the first planetary gear mechanism 10 and second planetary gear mechanism 20. The rotational power of the tornado gear Tg is gradually increased and outputted to the ring gear 10r, and the combined power is transmitted from the first planetary gear mechanism 10 through the third-speed gear train to the drive wheels. In this way, the third-speed gear train performs acceleration.

If the acceleration being performed by the third-speed gear train is continuously maintained, the fifth-speed gear train performs acceleration (fifth-speed to sixth-speed). In this case, in order to temporarily output the power of the engine from the ring gear 20r to the second clutch C2, the third brake B3 is disengaged, and the brake B4 is engaged. Thus, the distributed power is transmitted through the second clutch C2 to the second input shaft 3. The rotational speed of the second input shaft 3 is the same as that of the fifth-speed gear train from the drive wheel side. For this reason, the second clutch C2 is disengaged temporarily and synchronized. Thus, the fifth-speed gear train is established, completing a pre-shift. The power transmitted from the carrier 20c to the pinion gear Pg through the clutch C3 is interrupted due to the disengagement of the clutch C3. Thus, the tornado gear Tg rotates inertially. At this time, the acceleration may be continued without interruption by applying the high hydraulic pressure P2 to the tornado actuator and rotationally driving the pinion gear Pg by the force of the tornado actuator in the axial direction as described above (until the gear shift is made due to the switching between the clutches). Subsequently, the first clutch C1 is disengaged, and the second clutch C2 is re-engaged (double-clutch). Thus, the clutches are switched, so that a shift to the fifth-speed gear is made.

While the rotational speed is doubled based on the third-speed gear ratio and the resulting power is outputted to the drive wheels, the number of revolutions of the engine does not change. Accordingly, the rotational speed based on the fifth-speed gear ratio of this (constant) number of revolutions of the engine is the same as the rotational speed from the drive wheel side, and a gear shift is made instantly without shift shock. Subsequently, the hydraulic pressure P2 is released, and the hydraulic pressure P1 for braking the tornado gear Tg (pinion gear Pg) is applied (alternatively, the first brake B1 may be used as brake by engaging and braking it). After the clutch C3 is engaged and the tornado gear Tg is braked, the hydraulic pressure P1 is released. Subsequently, the brake B4 is disengaged; the second brake B2 is engaged; and the power distributed by the first planetary gear mechanism 10 is transmitted through the tornado gear Tg to the second planetary gear mechanism 20. During the period from when the tornado gear Tg (pinion gear Pg) is braked to when it starts (at 150 rpm), the number of revolutions of the engine is electronically controlled along with the inertia torque so that the acceleration is not interrupted. Subsequently, the second brake B2 is engaged; the number of revolutions of the engine is restored to the original constant rotation; and the resulting rotational power is distributed to the first planetary gear mechanism 10 and second planetary gear mechanism 20. The rotation of the tornado gear Tg is gradually increased and outputted to the carrier 20c, and the combined power is transmitted from the second planetary gear mechanism 20 through the fifth-speed gear train to the drive wheels. In this way, the fifth-speed gear train performs acceleration.

If the acceleration being performed by the fifth-speed gear train is continuously maintained, the seventh-speed gear train performs acceleration. In this case, a shift to the seventh-speed gear is made through the same process as the acceleration process performed by the third-speed gear train. The power of the engine is distributed to the first planetary gear mechanism 10 and second planetary gear mechanism 20. The rotation of the tornado gear Tg is gradually increased and outputted to the ring gear 10r. The combined power is transmitted from the first planetary gear mechanism 10 through the seventh-speed gear train to the drive wheels. In this way, the seventh-speed gear train performs acceleration.

While the first-speed gear train, third-speed gear train, and fifth-speed gear train perform acceleration (first-speed to second-speed), acceleration (third-speed to fourth-speed), and acceleration (fifth-speed to sixth-speed), respectively, in the present embodiment, the start/slow-speed gear train, second-speed gear train, fourth-speed gear train, and sixth-speed gear train may perform acceleration (start/slow-speed gear to first-speed), acceleration (second-speed to third-speed), acceleration (fourth-speed to fifth-speed), and acceleration (sixth-speed to seventh-speed). Further, control may be performed so that both types of acceleration are freely exchanged. The driving, braking, and the like of the tornado gear Tg (pinion gear Pg) are controlled by the ECU (switch).

As seen above, in the present embodiment, the twin-clutch only switches between the two clutches during a gear shift by performing a pre-shift in which the dog clutch of the next gear is engaged. Further, the engine is allowed to rotate at approximately constant speed. Thus, first, the clutches can be switched without shift shock. Further, pre-synchronization can be performed to establish a gear train and thus the synchronizer can be simplified. Further, during maximum acceleration, acceleration can be performed while always keeping the number of revolutions of the engine at the number of revolutions for generating a maximum output. That is, the present embodiment maintains the maximum output by driving the gears and therefore is the best in efficiency and performance among mechanical transmissions. Further, since the engine rotation is reduced to a low output during cruise running, both "high power performance" and "low fuel consumption/low pollution" can be achieved at very high level. In particular, the gear ratio of the start/slow-speed gear train Gc is set to a higher value than the first-speed gear ratio so that a high torque is produced and thus the start/acceleration force is further increased. As a result, this characteristic is very useful in various traffic situations, including a start after waiting at traffic lights, a start at a rotary, a start with a right/left turn at an intersection, and an urgent start.

The energy-saving mode by the switch, and the like in conventional vehicles, have been made the switch, such as the sport mode, which by the energy-saving mode automatically becomes the energy-saving traveling in, also is also suitable for the driver's consciousness become energy-saving mode in terms of environmental performance it's there, but the fact that switches the switch to say must have a decent consciousness, for example, once resulting in energy-saving mode will ease not to sport mode, also the pleasure becomes not also from the sport mode to the energy-saving mode, such as that it is thought that it comes happening. It impairs the driving pleasure, it becomes to that. Since it easier to "switch" in the acceleration work one in this mechanism, does not cause stress as described above since it allows the running freely in a large output, etc. at any time.

In the present embodiment, the power transmission path switch (ECU) can separate the geared continuously variable transmission from the transmission path of the gear change mechanism. Thus, as in a typical gear change transmission, a transmission path consisting of the engine > gear > drive wheels can be used separately. As a result, the vehicle can run using the present transmission as a twin-clutch transmission in case a failure occurs in the tornado gear Tg or pinion gear Pg.

### Constant-Speed Running

As described above, during constant-speed running, the typical transmission is used in place of the geared continuously variable transmission. Specifically, the power is transmitted to the drive wheels through a transmission path in which the ring gear 10r of the first planetary gear mechanism 10 is fixed (the first brake B1 is engaged) and the gear train is connected to the engine > sun gear 10s > carrier 10c > first clutch C1, or through a transmission path in which the carrier 20c of the second planetary gear mechanism 20 is fixed (the brake B4 is engaged) and the gear train is connected to the engine > sun gear 20s > ring gear 20r > second clutch C2. A manual operation is performed when the amount of stamping on the accelerator pedal is in a range of 0 to a1.

When the accelerator pedal is restored from the acceleration state and the amount of stamping on the accelerator pedal becomes a0 to a1, the ECU (power transmission path switch) determines that a transition to constant-speed running has been requested and makes a transition from acceleration to constant-speed running. In the present embodiment, a transition from acceleration to constant speed is made as follows: for first-speed acceleration, first-speed and second-speed; for third-speed acceleration, third-speed and fourth-speed; for fifth-speed acceleration, fifth-speed and sixth-speed; and for seventh-speed acceleration, seventh-speed. That is, two constant-speed gears (lower-speed side, higher-speed side) are assigned to one (acceleration) gear. For example, the lower-speed side of the vehicle speed range covered by the first-speed (acceleration) gear makes a transition to the first speed, and the higher-speed side thereof makes a transition to the second speed. The lower-speed side of the vehicle speed range covered by the third-speed (acceleration) gear makes a transition to the third speed, and the higher-speed side thereof makes a transition to the fourth speed. Further, in the present embodiment, the second-speed gear and third-speed gear, the fourth-speed gear and fifth-speed gear, and the sixth-speed gear and seventh-speed gear are disposed on the respective same shafts. For example, when the vehicle speed enters the higher-speed side during the first-speed acceleration, it is determined that the acceleration will continue and the second-speed gear train is used until immediately before the third-speed gear train starts to be established so that an acceleration gear shift is made smoothly. Or, when the vehicle speed enters the higher-speed side during the third-speed acceleration, it is determined that the acceleration will continue and the fourth-speed gear train is used until immediately before the fifth-speed gear train starts to be established so that an acceleration gear shift is made smoothly. In other embodiments, there may be employed a four-shaft gear change mechanism in which the second-speed gear, fourth-speed gear, and sixth-speed gear are disposed on a fourth shaft.

Further, if a transition from constant-speed running at the higher-speed gear to acceleration running is made, one gear-lowered acceleration is performed as follows: the pinion gear Pg waits in a position corresponding to the current vehicle speed on the tornado gear Tg; and second-speed (the first-speed gear is established simultaneously) to first-speed acceleration, fourth-speed (the third-speed gear is established simultaneously) to third-speed acceleration, or sixth-speed (the fifth-speed gear is established simultaneously) to fifth-speed acceleration is performed.

For the purpose of fuel consumption improvement of a vehicle coasting (coasting in a state of opening the accelerator pedal) it is known. For example, when it is shifted to the constant-speed running from accelerated running, configured to match the engine speed to the rotational speed of the current gear in the vehicle speed at that time, at that time within the range of the vehicle speed at the current gear, in the case of the high speed range, the throttle opening fuel economy deteriorates and becomes large and sudden engine rotational fluctuations or gives an uncomfortable feeling to the driver since some cases also the neutral coasting until example becomes approximately minimum vehicle speed at the current gear, by opening a power interrupting device of the first clutch C1 and second clutch C2, etc. drive path to shut off the engine power is the travel that were excluded engine braking effect (engine idling) and became the lowest vehicle speed in the current gear and performs cruise control is engaged and power interrupter device at the time, it may be configured such that. While the car is controllable conditions, such as driving condition is good, it may also be secured by at least a manual operation such as those of a neutral condition in which the driving force is not involved in reverse. Coasting for the purpose of fuel consumption performance improvement of vehicles are possible in various situations, and also in terms of mental health, such a (during running) or it may be made possible neutral switching. Except for the special running environment, it should be possible also neutral travel combined with this kind.

Moreover, the constant speed drive region 0 ∼ a1 of accelerator pedal depression, as can widening or narrowing the space may be left to manual operation device is provided in the driver's discretion, such as switches or levers.

### Deceleration running

When the accelerator pedal is restored and the amount of stamping on the accelerator pedal becomes a0 or when the foot leaves the accelerator pedal and stamps the brake pedal, the ECU determines that deceleration has been requested and performs deceleration.

The states of the respective units during deceleration are the same as those during constant-speed running. In the deceleration state of the gear train connected to the first clutch C1, the ring gear 10r of the first planetary gear mechanism 10 is fixed (the first brake B1 is engaged), and the engine brake works through a transmission path consisting of the engine > sun gear 10s > carrier 10c > drive wheels. In the deceleration state of the gear train connected to the second clutch C2, the carrier 20c of the second planetary gear mechanism 20 is fixed (the brake B4 is engaged), and the engine brake works through a transmission path consisting of the engine > sun gear 20s > planetary gear 20p > ring gear 20r > drive wheels.

### Shift to Lower Gear

If the deceleration at the current gear is continued, a shift to a lower gear is made. At this time, the number of revolutions of the engine must be increased in accordance with an increase in the number of revolutions from the drive wheel side due to the shift from the current gear to the lower gear. If engine control such as blipping is not performed, the number of revolutions of the engine is increased while depending on the friction of the clutch. In this case, if an attempt is made to quickly engage the clutch to quickly increase the number of revolutions, the shift shock is increased, affecting the vehicle stability. On the other hand, if the clutch is slowly engaged by half-clutch, the number of revolutions of the engine can be slowly increased and thus deceleration can be slowly performed. However, this means increasing the rotation of the crank shaft from the drive wheel side, unlike in engine control, and there is a large difference in the number of revolutions. Thus, a high load is put on the clutch.

The present transmission, on the other hand, matches the rotations by using a hydraulic pressure rather than by increasing the engine rotation, as well as can substitute the tornado gear Tg and pinion gear Pg for half-clutch. Specifically, in the present transmission, the planetary gear mechanisms are disposed between the engine and two clutches (twin-clutch). One of the three rotors of each planetary gear mechanism is connected to the tornado gear Tg and pinion gear Pg through the clutch or two-way clutch. That is, another clutch is disposed between the engine and twin-clutch. Thus, for example, when the two gear trains are established, the twin-clutch can be connected simultaneously. Further, since the pinion gear Pg is connected to the hydraulic device serving as another power source, it can be used for a pre-operation such as rotation matching.

While the pinion gear Pg waits in a position corresponding to the current vehicle speed considering the next acceleration (considering the amount of output during acceleration) during constant-speed running, the pinion gear Pg is basically free. If a transition from constant speed to deceleration is made; the deceleration is continued; and then a shift to a lower gear is made, as described above, for example, if a transition from constant speed at a gear train A connected to the first clutch C1 to deceleration is made, and a shift to a lower gear is made during the deceleration at a gear train B connected to the second clutch C2, the initial states of the respective devices are as follows: the pinion gear Pg lies on the large-diameter side of the tornado gear Tg (the lowest-rotation position at A immediately before the shift to the lower gear); the tornado gear Tg and first planetary gear mechanism 10 are interrupted; the third clutch C3 is disengaged; the second clutch C2 is engaged; and B has yet to be established. First, as a pre-operation, the pinion gear Pg is moved to any position on the small-diameter side of the tornado gear Tg, and the third clutch C3 is engaged. Subsequently, the pinion gear Pg is again caused to rise toward the large-diameter side. In the initial stage of the rising process, the rotation of the pinion gear Pg (due to the movement thereof) is used to match the rotations to establish B (rotation control is performed so that the rotations are matched). Specifically, since the pinion gear Pg is connected to the carrier 20c through the third clutch C3, the rotation (backward rotation) of the carrier 20c is increased by increasing the rotation of the pinion gear Pg; the rotation of the ring gear 20r is increased (since the rotation of the sun gear is being maintained); the rotation of the countershaft (second input shaft 3) is increased; and the second clutch C2 is temporarily disengaged. Thus, B is established. In typical rotation matching such as blipping, the engine rotation always has to be used to increase the rotation. Therefore, it is necessary to temporarily disengage the clutch to interrupt the transmission of the drive power. On the other hand, the present transmission can match the rotations on a path different from the current drive path to establish a gear train.

Subsequently, the clutches are switched by engaging the first clutch C1 and simultaneously re-engaging the second clutch C2 (double-clutch; the rotations of the first clutch C1 and second clutch C2 are approximately the same at this re-engagement). Subsequently, if deceleration is performed, the rotation of the pinion gear Pg is slowly reduced (the movement speed of the pinion gear Pg is slowly reduced). Thus, the rotational speed of the sum gear, that is, the engine can be slowly increased from a low speed to a high speed. That is, by slowly increasing the number of revolutions of the engine from the drive wheel side, deceleration can be slowly and smoothly performed without shift shock.

A similar procedure is performed when shifting from the gear train connected to the second clutch C2 to the gear train connected to the first clutch C1. If multiple gear shifts are quickly performed, for example, if deceleration is performed using the foot brake, the pinion gear Pg is caused to rise or fall around the center of the tornado gear Tg, and gear shifts are performed while skipping sequences or gears.

If the vehicle lacks the torque, for example, due to constant-speed running on an uphill road, or if the vehicle performs greater acceleration during constant-speed running, it is necessary to increase the gear ratio through a gear shift to obtain the required torque. Even in this case, the rotations can be matched by using the method described above in addition to typical engine control such as blipping. In this case, the first clutch C1 and second clutch C2 are switched, and engine rotation blipping is performed simultaneously. After the rotations are matched, the pinion gear Pg is stopped in any position considering acceleration. For this reason, the amount of movement of the pinion gear Pg in the first pre-operation is also determined considering acceleration.

In the present embodiment, as described above, the second-speed and third-speed gears, fourth-speed and fifth-speed gears, sixth-speed and seventh-speed gears are disposed on the respective same shafts. Gears cannot be directly changed between these gear pairs. Accordingly, gears are skipped when shifting to a lower gear. If a shift to a directly lower gear is made (in the present embodiment, from the seventh-speed gear to the sixth-speed gear, from the fifth-speed gear to the fourth-speed gear, or from the third-speed gear to the second-speed gear), there is performed a process in which a shift to a lower gear is made temporarily while skipping gears and then a shift to a higher gear is made.

As seen above, when shifting to a lower gear, the rotations can be matched by using a hydraulic pressure rather than by increasing the engine rotation. Thus, as in a shift to a higher gear, a gear shift can be performed smoothly without torque loss.

Further, a transition from deceleration to acceleration at each gear train is performed in the same manner as a transition from constant-speed running to acceleration.

As seen above, a shift to a lower gear or higher gear can be performed smoothly without torque loss and shift shock. Thus, the present transmission is useful, for example, in running on an uphill road, on which traffic congestion is likely to occur. Further, since the present transmission can make a gear shift without shift shock even during low-speed running, it is very useful in running in traffic congestion, which can occur in cities around the world nowadays. Further, since, in the present transmission, almost no load is put on the elements requiring synchronization as described above, it advantageously has high durability.

The control of the tornado gear Tg and pinion gear Tg, the control of a gear shift and shift timing, the control of the engine rotation, and the like are performed based on the amount of stamping on the accelerator pedal, vehicle information such as the vehicle speed, control programs, and maps (not shown).

A second embodiment is as follow: a gear change mechanism and a tornado gear Tg unit are disposed coaxially; in the gear change mechanism, the rotors of multiple planetary gear mechanisms are selectively connected together by a hydraulic friction clutch, such as a single-disc or multi-disc clutch or brake, engaged by a hydraulic actuator; thus there is obtained a known planetary gear-type multi-step transmission in which multiple gears are alternatively achieved; and the speed of power outputted from two shafts of the tornado gear Tg unit is changed using a known method, and the resulting power is transmitted to an output member. In this case, the mechanism may include a torque converter. In other embodiments, the transmission may include a torque converter.

Now the present invention will he something of being able to increase the vehicle speed without lowering the engine speed by the gear type but, for example, when changing in the art vehicles conventional vehicles, the vehicle speed is increased to the engine rotational speed is constant, as sometimes it is regarded negatively as discomfort that. Therefore First "Although the MT vehicle such as a conventional stepped transmission wheel had to go up to (manually) the engine speed to accelerate the vehicle gradually, the output rotation by the action of the conical gears on the advanced technologies. It will raise, there is no need to bother increase the engine rotation ", even if conscious" Now environmental problems, is good efficient operation as long as possible. If To that such MT vehicle, the vehicle traveling condition, and taking into road conditions head, it must be realized in precise shift operation and the accelerator work acceleration and deceleration or the like. But as long as it is not that it is to enjoy in the sports sense, nothing more than annoying in everyday use. However, according to the advanced technology such a troublesome operation and considerations without any, moreover most suitable also from the viewpoint of most efficiently accurately environmental performance improvements it is possible to power available in the transmission. "" Various power transmission, but technology was born there is nothing to clearly more than what technology MT if comprehensive evaluation, it has been a pretext, this advanced technology hide the clear itself from those things. It is that this is what is obvious, such an excuse will not be-class anymore. " "Are those such as the exhilaration of immersing himself in the vehicle are those born from the desire to move the original favorite to place (to far) freely, or flows realistic scenery and air of an automobile or the like, driving operation or the like was only (there is no way) means for that purpose. The case of the original purpose, usually for the driver, for example, winding roads, etc., is supposed to be hands full with only steering and accelerator work, putting the cart before the horse to be a completely different motor sports entertainment such as rationale the driving operation theory like generated from ideas it is not to be confused with a sense of incongruity theory, etc.. " "That raise or lower the engine speed, in other words old beauty and has been the engine sound becomes a symbol of the non-efficiency, it becomes a thing that does not change from that of the young driver's mayhem-oriented, to the bandwagon to emphasize the environmental performance (except motor sports, etc.) defeat, it is those that are not stylish harm the Earth's health. "there needs to be well-known appeal to things like.

On the other hand, in the operation of conventional stepped transmission vehicles, for example during acceleration or the like to obtain the information, such as the current gear and the engine sound as a sensory grasp means such as the current vehicle speed, because the scene is also often called, it is practical due to loss of such information the complaint, etc. needs to be consideration. Need to constantly look driving state of the vehicle front and surrounding the operation, it is impossible to stare at the display device, and in 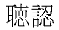 rather than viewing the information described above, as long as that, for example dissatisfied. It may be provided with means for providing some sound information as said detection means as an optional measure. As dissatisfaction measures against such new technology in the past, by the visual performance of eco-labeling, etc., looking Away complaints from the discomfort of the prior art swap to snob effect (avoidance to) there is an example that is particularly impressive success.

Of this mechanism, the number of revolutions or the like for important information, for example, change for the driver, because is the output rotational speed of the Tornado gear portion rather than the engine speed, as the detection information to provide a sensor, for example audio performance, electronic sound it can be provided together with the current gear stage information (for example, put sound like that pit each time change), and the like. And since than nominal of providing necessary information for the new technology, may be free performance also is allowed to reverse. Pseudo engine sound (light racing sound, deep bass, explosions, etc.) and natural sound, it is possible to all kinds of audio performance small and large intensity of the artificial sound.

While the power transmission mechanism and geared continuously variable transmission of the present invention have been described based on the embodiments, the specific configuration is not limited to the embodiments. Changes, additions, or the like can be made to the design without departing from the spirit and scope of the present invention as set forth in Claims. For example, the power transmission path may be the power source (engine) > gear change mechanism > spiral geared continuously variable transmission > output member, or other transmission paths. In the above embodiment, the planetary gear mechanisms each consisting of three rotors are used as differential mechanisms. For example, the power input shaft is connected to the sun gear of the three rotors of the first planetary gear mechanism 10; the tornado gear Tg is connected to the ring gear 10r thereof; and the carrier 10c thereof is connected to the output to the gear change mechanism. However, the input/output shaft or tornado gear Tg may be connected to other rotors, and various combinations are possible. Further, multiple geared continuously variable transmissions may be used. Multiple geared continuously variable transmissions may be disposed in series, or at least one geared continuously variable transmission may be disposed in parallel so that power is distributed. While the power source is typically a gasoline or diesel internal combustion engine or electric motor, it may be a hydrogen engine, LPG engine, methanol engine, or the like. Further, in the present invention, various mechanisms, devices, or the like may be disposed.

While the present invention is a combination of a geared CVT serving as a geared torque converter and a gear change mechanism serving as a sub transmission, the geared CVT is referred to as a geared stepless transmission, which is a general term, in this specification.

### DESCRIPTION OF NUMERALS

- 1: drive shaft
- 2: first input shaft
- 3: second input shaft
- 4: countershaft
- 5: output shaft
- 6: helical gear shaft
- 7: tubular case
- 10: first planetary gear mechanism
- 20: second planetary gear mechanism
- 30: third planetary gear mechanism
- 11: bevel gear
- 12: shaft gear
- 13: input shaft gear
- 14: countershaft gear
- 15: arm
- 16: pinion gear position sensor
- 17: shift fork
- Tg: tornado gear
- Pg: pinion gear

## Claims

1. A geared stepless transmission mounted on a vehicle comprising:
a geared continuously variable transmission, wherein the geared continuously variable transmission comprises a spiral gear and a second gear; the spiral gear comprises a first rotation shaft; the spiral gear has a row of approximately uniform teeth arranged at an equal pitch extending in a spiral fashion on a conical or disc-shaped outer peripheral surface thereof; the second gear comprises a second rotation shaft disposed in parallel with a direction of a bus on the conical surface (pitch cone surface) of the spiral gear or in parallel with a radial direction of the disc-shaped surface of the spiral gear; the second gear is engaged with the spiral gear and disposed so as to be movable along a direction of the second rotation shaft; when the second gear rotates due to rotation of the second rotation shaft moves while continuously changing an engaging position of the spiral gear and second gear, or when the second gear rotates due to rotation of the spiral gear moves while continuously changing the engaging position of the spiral gear and second gear, a radius of a pitch circle of the spiral gear continuously changes;
driver configured to drive the spiral gear and the second gear;
brake configured to brake the spiral gear and the second gear;
switch configured to switch between the driver and the brake ;
a power distribution mechanism configured to distribute power of a power source;
a power combination mechanism configured to combine power outputted from the geared continuously variable transmission which has used the distributed power;
a gear change mechanism configured to change power in steps and to output the resulting power; and
power transmission path switch configured to switch between a power transmission path comprising the geared continuously variable transmission and a power transmission path not comprising the geared continuously variable transmission, the power transmission paths being paths from the power source to drive wheels

2. The geared stepless transmission of Claim 1, wherein in the geared continuously variable transmission, the spiral gear transmits power by both forward rotation and backward rotation.

3. The geared stepless transmission of Claim 1 or 2, wherein the spiral gear transmits power alternately by forward rotation and by backward rotation.

4. The geared stepless transmission of any one of Claims 1 to 3, wherein at least one of the power distribution mechanism and the power combination mechanism is a differential mechanism.

5. The geared stepless transmission of Claim 4, wherein the differential mechanism is a planetary gear mechanism or differential gear mechanism.

6. The geared stepless transmission of any one of Claims 1 to 5, further comprising a plurality of differential mechanisms, wherein
if one of the differential mechanisms is used as an element of the power distribution mechanism, the other differential mechanisms are used as the power combination mechanism, and if the other differential mechanisms are used as an element of the power distribution mechanism, the one differential mechanism is used as the power combination mechanism.

7. The geared stepless transmission of any one of Claims 1 to 6, further comprising movement member configured to move the second gear on the second rotation shaft by a force working on the second gear in an axial direction.

8. The geared stepless transmission of any one of Claims 1 to 7, wherein a force working on the second gear in an axial direction is used to rotationally drive or rotationally brake the second gear.

9. The geared stepless transmission of any one of Claims 1 to 8, wherein the movement member uses a hydraulic pressure and a wire mechanism.

10. The geared stepless transmission of any one of Claims 1 to 9, further comprising second gear position detector configured to detect a position of the second gear.

11. The geared stepless transmission of any one of Claims 1 to 10, wherein the spiral gear contains a hollow space or is filled with a lightweight material.

12. The geared stepless transmission of Claim 11, wherein at least one of the power distribution mechanism and the power combination mechanism is disposed in the hollow space.

13. The geared stepless transmission of any one of Claims 1 to 12, wherein the gear change mechanism is connected to a plurality of clutch mechanisms configured to freely transmit or interrupt power of the power source.

14. The geared stepless transmission of any one of Claims 1 to 13, further comprising an electric motor.

15. The geared stepless transmission of any one of Claims 1 to 14, wherein an electric motor is used to rotationally drive at least one of the second rotation shaft and the spiral gear.
